# EUROPÄISCHE PATENTSCHRIFT

(11) **EP 3 645 322 B1**
(45) Veröffentlichungstag und Bekanntmachung des Hinweises auf die Patenterteilung: **21.02.2024**
(21) Anmeldenummer: 18721323.6
(22) Anmeldetag: 25.04.2018
(51) Int. Cl.: B60H 1/00

(54) **VERFAHREN UND VORRICHTUNG ZUR STEUERUNG VON KLIMATISIERUNGSEINRICHTUNGEN IN EINEM KRAFTFAHRZEUG**
METHOD AND APPARATUS FOR CONTROLLING AIR CONDITIONING DEVICES IN A MOTOR VEHICLE
PROCÉDÉ ET DISPOSITIF DE COMMANDE DE DISPOSITIFS DE CLIMATISATION DANS UN VÉHICULE AUTOMOBILE

(30) Priorität: 30.06.2017 DE 102017211202
(43) Veröffentlichungstag der Anmeldung: 06.05.2020
(73) Patentinhaber: Volkswagen Aktiengesellschaft, 38440 Wolfsburg (DE)
(72) Erfinder: GIESERT, Anna-Lena, 38536 Seershausen (DE); KAISER, Andreas, 25488 Holm (DE); LANSMANN, Malte, 39638 Gardelegen (DE); WOLZE, Zeno, 12159 Berlin (DE); HENGSTENBERG, Oliver, 15748 Märkisch Buchholz (DE); BAUMGARTEN, Jens, 10115 Berlin (DE); BERG, Markus, 10555 Berlin (DE); EFFERTZ, Jan, 38173 Sickte (DE); HELMS, Karsten, 38553 Wasbüttel (DE); ANDRES, Frank, 29356 Bröckel (DE)
(86) Internationale Anmeldenummer: PCT/EP2018/060519
(87) Internationale Veröffentlichungsnummer: WO 2019/001798

(56) Entgegenhaltungen:
- DE-A1-102007 028 607
- DE-A1-102016 014 223
- US-A1- 2012 166 041
- US-A1- 2017 120 724

## Beschreibung

Die vorliegende Erfindung betrifft ein Verfahren zur Steuerung einer Klimatisierungseinrichtung in einem Kraftfahrzeug sowie eine Vorrichtung zur Ausführung des Verfahrens.

Die in modernen Kraftfahrzeugen vorhandenen Klimatisierungseinrichtungen weisen eine immer größere Funktionsvielfalt auf. War es früher ausschließlich möglich, die Temperatur und die Luftverteilung einzustellen, so sind heutzutage zahlreiche weitere Einrichtungen verbaut, die Einfluss auf das Fahrzeugklima und damit das Wohlbefinden der Fahrzeuginsassen haben. Neben den bereits weit verbreiteten Sitzheizungen gehören hierzu beispielsweise Lenkradheizungen und belüftete Sitze.

Die immer größere Vielfalt sorgt dafür, dass die vorzunehmenden Einstellungen und die dabei zugrunde liegenden Abhängigkeiten durch den Bediener kaum noch zu durchschauen sind. Der Bediener wird daher eine Einstellung auswählen, die möglicherweise nicht vollständig seine Klimatisierungswünsche erfüllt bzw. die nicht alle der vorhandenen Möglichkeiten ausschöpft. In Konsequenz führt dieses dazu, dass sein Wohlbefinden eingeschränkt ist oder er möglicherweise die vorgenommenen Einstellungen nachregeln muss. Sind auch noch mehrere Klimatisierungszonen in einem Fahrzeug vorhanden, treten diese

Erschwerend kommt hinzu, dass die Ansprüche an die Regelgüte stetig zunehmen. Um diesen gerecht zu werden, wird auf immer mehr Sensordaten zurückgegriffen. Beispiele sind hier Luftgüte- oder Beschlagsensoren.

Waren die Klimatisierungseinrichtungen früher ausschließlich manuell einstellbar, so haben heute elektronisch geregelte Systeme flächendeckend Einzug gehalten. Der Bediener gibt üblicherweise zunächst ausschließlich eine Temperatur vor. Die Steuerung des Klimatisierungssystems stellt im Nachgang einen Automatikbetrieb zur Verfügung, mit dessen Hilfe die vorgewählte Temperatur unter Verwendung einer standardisierten Luftverteilung eingeregelt wird. Wünscht der Bediener eine abweichende Luftverteilung, hat er die Möglichkeit, manuell in die Steuerung einzugreifen.

Bereits die begrenzte Anzahl der einzustellenden Parameter zur Luftverteilung überfordert viele Bediener. Erschwerend kommt hinzu, dass der Bediener die komplexen Wirkzusammenhänge zwischen den Einstellmöglichkeiten einerseits und den vorliegenden Rahmenbedingungen, z.B. der Luftfeuchtigkeit, andererseits nicht immer richtig bewerten kann. Dieses führt dazu, dass er sich nicht oder nur auf Umwegen seinem persönlichen Klimatisierungsziel nähert.

Erschwerend kommt hinzu, dass die klimatischen Bedingungen in einem Kraftfahrzeug sowie deren Veränderung sehr unterschiedlich wahrgenommen werden. Sie unterliegen in ausgeprägtem Masse dem persönlichen Empfinden. Dieses stellt hohe Anforderungen an die Steuerung einer Klimatisierungseinrichtung.

Gesucht ist daher eine Lösung, die einerseits die komplexen, vielfältigen Möglichkeiten moderner Klimatisierungseinrichtungen ausschöpft, andererseits jedoch eine einfache und intuitive Bedienung ermöglicht.

Einen Lösungsvorschlag für eine vereinfachte Bedienung einer Klimatisierungseinrichtung stellt die Schrift DE 10 2014 204 890 zur Verfügung. In ihr wird ein Verfahren zum Betreiben einer Klimatisierungseinrichtung in einem Kraftfahrzeug beschrieben, das mit mehreren Klimatisierungszonen und mehreren Klimatisierungseinheiten ausgestattet ist. Klimatisierungseinheiten im Sinne der Erfindung sind dabei z.B. der Wärmetauscher zur Wärmeerzeugung oder die entsprechenden Stellvorrichtungen zur Luftverteilung. Das Verfahren sieht die Vorgabe eines Klimatisierungsziels durch den Bediener vor, wobei diese Vorgabe für jede Klimazone voneinander unabhängig erfolgen kann. Eine Steuerungsvorrichtung setzt diese Klimatisierungsziele des Bedieners in Steuerparameter der einzelnen Klimatisierungseinheiten um. Entsprechend eines vorgegebenen Verlaufs wird das Klimatisierungsziel umgesetzt.

In der DE 10 2014 209 247 wird eine Lösung zur Herbeiführung einer gewünschten Komforteinstellung in einem Kraftfahrzeug offenbart. Unter einer Komforteinstellung wird dabei ein übergeordnetes Klimatisierungsbedürfnis eines Bedieners verstanden. Mit diesem übergeordneten Klimatisierungsbedürfnis sind weitere Klimatisierungsparameter mittelbar verbunden, die wiederum die in einem Kraftfahrzeug vorhandenen Klimatisierungseinheiten ansprechen können. Die Erfindung schlägt vor, dass die Klimatisierung in dem Kraftfahrzeug durch die Vorgabe einer an dem subjektiven Empfinden orientierten Einstellung ausgelöst wird. Die Umsetzung erfolgt anschließend durch Ansteuerung der einzelnen Klimatisierungseinheiten. Erreicht werden soll hierdurch eine wirkungsorientierte, intuitive Bedienung der Klimatisierungseinrichtung in einem Kraftfahrzeug.

Die DE 10 2016 014 223 A1 betrifft ein Verfahren zur Unterstützung eines Fahrzeuginsassen beim Verbessern einer Luftqualität in einem Innenraum eines Fahrzeugs, bei dem einer Datenverarbeitungseinrichtung des Fahrzeugs eine für die luftqualitätsrelevante Eingangsgröße bereitgestellt und anhand dieser ein Luftqualitätswert berechnet wird. Um mit möglichst geringem Aufwand eine Verbesserung der Luftqualität in dem Fahrzeug zu ermöglichen, ist es dabei vorgesehen, dass mittels der Datenverarbeitungseinrichtung ein auf dem berechneten Luftqualitätswert basierender Handlungsvorschlag zur Verbesserung der Luftqualität bestimmt und mittels einer Ausgabeeinrichtung des Fahrzeugs an den Fahrzeuginsassen ausgegeben wird.

Trotz der beschriebenen bekannten Lösungen verbleibt die Aufgabe, eine bedürfnisorientierte, intelligente Steuerung der Klimatisierungseinrichtungen in einem Kraftfahrzeug zu beschreiben, die eine umfassende Berücksichtigung der vielfältigen Einflussgrößen auf die optimale Klimatisierung eines Fahrzeuginnenraums ermöglicht.

Erfindungsgemäß wird diese Aufgabe durch ein Verfahren gemäß des Anspruches 1 gelöst. Vorteilhafte Ausgestaltungen der Erfindung werden durch die Ansprüche 2 bis 5 offenbart. Zusätzlich wird in dem Anspruch 6 eine Vorrichtung beschrieben, mit deren Hilfe das vorgeschlagene Verfahren ausgeführt werden kann.

Der mit der offenbarten Lösung erzielbare technische Effekt besteht darin, ein einfaches, intelligentes Verfahren zur Herbeiführung eines den Wünschen des Bedieners entsprechenden Klimatisierungszustandes in einem Kraftfahrzeug zu beschreiben, das in der Lage ist, die komplexen Wirkzusammenhänge bei der Klimatisierung in angemessener Weise zu berücksichtigen.

Erfindungsgemäß sieht das Verfahren vor, dass in einem ersten Schritt ein von einem Bediener formuliertes Klimatisierungsbedürfnis erfasst wird. Unter einem Klimatisierungsbedürfnis ist eine an den Wünschen des Bedieners orientierte Vorgabe für die Klimatisierungseinrichtungen in dem Kraftfahrzeug zu verstehen. Im einfachsten Fall handelt es sich beispielsweise um Vorgaben wie "Schnell Aufheizen" oder "Schnell Abkühlen" ergänzt um die Angabe der Zieltemperatur. Aber auch weitergehende Vorgaben wie "Beschlag entfernen" oder " Füße wärmen" sind Bedürfnisvorgaben im Sinne der Erfindung.

Das Klimatisierungsbedürfnis stellt erfindungsgemäß eine Beschreibung aus Sicht des Bedieners dar. Kennzeichnenderweise kann ein solches Bedürfnis durch eine einzelne Klimatisierungseinrichtung oder auch durch mehrere Klimatisierungseinrichtungen realisiert werden. Zusätzlich kann es ergänzende Informationen enthalten. Z.B. ergänzt die in den genannten Beispielen erwähnte Vorgabe "Schnell" den Wunsch des Aufheizens bzw. Abkühlens um einen Hinweis, der Einfluss auf die Regelcharakteristik haben muss.

Zur Ausführung der Klimatisierungsfunktionen stehen die zuvor erwähnten Klimatisierungseinrichtungen zur Verfügung. Die Bezeichnung Klimatisierungseinrichtung wird im Sinne dieser Erfindung als gattungsbildender Begriff für alle Einrichtungen in einem Kraftfahrzeug verwendet, mit denen das Klima an die Wünsche der Fahrzeuginsassen angepasst werden kann. Ein Wärmetauscher ist beispielsweise eine Klimatisierungseinrichtung, die die Klimatisierungsfunktion "Erwärmen des Fahrzeug-Innenraums" ausführen kann. Ein weiteres Beispiel ist eine Sitzheizung, welche die Klimatisierungsfunktion "Erwärmen der Sitzoberfläche" ermöglicht.

Auf Basis des vorgegebenen Klimatisierungsbedürfnisses sieht die Erfindung eine Auflösung dieses Bedürfnisses in mindestens eine Klimatisierungsfunktion vor. Eine solche Klimatisierungsfunktion ist einer Klimatisierungseinrichtung eindeutig zugeordnet. Dieser Verfahrensschritt wird unter Einsatz einer ersten Steuerungsvorrichtung durchgeführt. Klimatisierungsfunktionen im Sinne der Erfindung sind demnach insbesondere das Aufheizen des Innenraums, ausführbar durch einen vorhandenen Wärmetauscher, das Kühlen des Innenraums, ausführbar durch einen Klimakompressor und sonstige Klimatisierungsfunktionen wie das Erwärmen einer Sitz- und/oder Lenkradheizung.

Zusätzlich sieht das erfindungsgemäße Verfahren vor, dass unter Verwendung von Sensoren mindestens eine klimatisierungsrelevante Einflussgröße erfasst wird. Hierunter wird jede Größe verstanden, die im Zusammenhang mit der Ausführung der Klimatisierungsfunktion von Bedeutung ist.

Beispiele für klimatisierungsrelevante Einflussgrößen sind die Luftgüte ausserhalb des Fahrzeuges, der Beschlagzustand der Frontscheibe, die Kühlwassertemperatur etc. Aber auch die momentane Innenraumtemperatur wird im Sinne der Erfindung als eine relevante Einflussgröße angesehen.

In einem weiteren Schritt sieht das erfindungsgemäße Verfahren einen Vergleich der mindestens einen, aus dem Klimatisierungsbedürfnis abgeleiteten Klimatisierungsfunktion mit der mindestens einen erfassten klimatisierungsrelevanten Einflussgröße vor. Dieser Schritt erfolgt unter Einsatz einer zweiten Steuerungsvorrichtung.

Die erste und die zweite sowie alle weiteren, für die Durchführung des Verfahrens erforderlichen Steuerungsvorrichtungen können im Sinne der Erfindung auch in einer Einheit zusammengefasst sein.

Als Ergebnis dieses Vergleichs steht fest, ob die ausgewählte Klimatisierungsfunktion und damit das Klimatisierungsbedürfnis des Bedieners umsetzbar ist und/oder eine Umsetzung unter den gegebenen Rahmenbedingungen empfehlenswert ist.

Das Ergebnis dieses Vergleichs wird dem Bediener über eine Ausgabeeinheit zurückgemeldet. Als Ausgabemedium für die Rückmeldung kommen insbesondere Anzeigen und/oder Lautsprecher in Betracht.

Die folgenden beiden Beispiele erläutern die Verfahrensschritte der offenbarten Erfindung:
▪ Der Bediener äußert den Wunsch, den Innenraum des Fahrzeuges schnell zu erwärmen. Der Verbrennungsmotor weist jedoch eine zu geringe Kühlwassertemperatur auf, was unter Zuhilfenahme eines Sensors zur Temperaturmessung festgestellt wird. In diesem Fall erfolgt ein entsprechender Hinweis, dass die Temperaturerhöhung nur langsam umgesetzt werden kann.
▪ Der Bediener äußert den Wunsch, die Frischluftzufuhr in den Innenraum des Fahrzeuges zu erhöhen. Der Luftgütesensor erkennt jedoch, dass die Güte der Umgebungsluft nicht den Anforderungen entspricht oder gar schlechter als im Innenraum ist. In diesem Fall wird eine Rückmeldung ausgegeben, dass die Umsetzung des geäußerten Klimatisierungsbedürfnisses nicht empfehlenswert ist.

In bevorzugten Ausgestaltungen sieht das erfindungsgemäße Verfahren unterschiedliche Eingabemöglichkeiten zur Erfassung des Klimatisierungsbedürfnisses des Bedieners vor. Hier kommen insbesondere Touchscreens, Sprachsteuerungssysteme oder Bedientasten in Betracht.

In einer weiteren bevorzugten Ausgestaltung startet nach festgestellter Ausführbarkeit der Klimatisierungsfunktion automatisch deren Ausführung. Die Rückmeldung an den Bediener dient in dieser Ausgestaltung ausschließlich der Information und erfordert keine Bestätigung zur Umsetzung.

Ist die Ausführbarkeit der Klimatisierungsfunktion nicht oder nicht vollständig gegeben, sieht eine bevorzugte Ausgestaltung der Erfindung vor, dass ein alternativer Vorschlag für mindestens eine Klimatisierungsfunktion ausgegeben und nach Bestätigung durch den Bediener ausgeführt wird. Wird in dem oben aufgeführten Beispiel die zu niedrige Kühlwassertemperatur für eine schnelle Erwärmung des Innenraums festgestellt, könnte ein Vorschlag sein, zusätzlich die Sitzheizung einzuschalten. Der Bediener kann den Vorschlag anschließend annehmen oder ablehnen.

In einer weiteren bevorzugten Ausgestaltung der Erfindung wird nach Ausführung der Klimatisierungsfunktion, d.h. dem Erreichen des Klimatisierungsbedürfnisses, eine Statusmeldung ausgegeben. Dieses kann insbesondere optisch und/oder per Audioausgabe erfolgen.

Die erfindungsgemäße Vorrichtung zur Ausführung des zuvor offenbarten Verfahrens umfasst zunächst mindestens eine Eingabevorrichtung zur Erfassung eines Klimabedürfnisses eines Bedieners. Hierfür stehen insbesondere Touchscreen-Vorrichtungen, konventionelle Bedientasten oder ein Spracheingabesystem zur Verfügung.

Weiterhin ist mindestens ein Sensor zur Messung einer klimatisierungsrelevanten Einflussgröße vorhanden. Dieses kann beispielsweise ein Sensor zur Messung der Luftgüte im Inneren des Kraftfahrzeuges oder ein Sensor zur Messung der Beschlagsituation der Frontscheibe sein.

Ferner ist in der beschriebenen Lösung eine erste Steuerungsvorrichtung vorgesehen, die das Klimatisierungsbedürfnis des Bedieners empfängt. Sie löst nach dem Empfang das Signal in ein oder mehrere Steuersignale für geeignete Klimatisierungsfunktionen der Klimatisierungseinrichtungen auf.

Weiterhin umfasst die Erfindung eine zweite Steuerungsvorrichtung, mit deren Hilfe die Ausführbarkeit der abgeleiteten Klimatisierungsfunktion überprüft werden kann. Dabei wird geprüft, ob das Klimatisierungsbedürfnis des Bedieners vollständig umsetzbar ist oder aber ob Rahmenbedingungen vorliegen, die eine Umsetzung einschränken oder unmöglich machen. Eine Einschränkung kann beispielsweise eine schlechte Luftqualität der Aussenluft oder eine zu niedrige Kühlwassertemperatur sein. Erkennt die Klimatisierungseinrichtung anhand der Sensordaten, dass die Qualität der Umgebungsluft schlechter ist als die im Innenraum, so kann das Klimabedürfnis "Frischluftzufuhr erhöhen" nicht sinnvoll ausgeführt werden.

Als weiteren Bestandteil sieht die erfindungsgemäße Vorrichtung daher eine Ausgabevorrichtung vor, mit deren Hilfe dem Bediener das Ergebnis des Vergleichs zurückgemeldet wird. Eine solche Rückmeldung kann insbesondere durch eine Textausgabe auf einem Display oder eine Audioausgabe mittels Lautsprecher erfolgen.

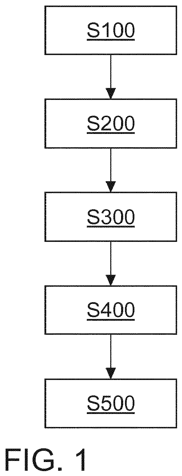

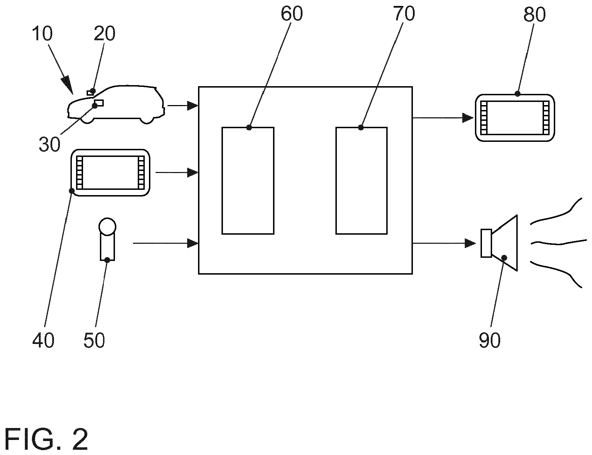

Im Folgenden wird ein bevorzugtes Ausführungsbeispiel des offenbarten Verfahrens sowie eine zur Ausführung geeignete Vorrichtung mit Bezug zu den Figuren 1 und 2 erläutert. Dabei beschreiben:
- Figur 1:: Das Verfahren zur Steuerung einer Klimatisierungseinrichtung mit den Schritten S100 bis S500
- Figur 2:: Den Aufbau der Klimatisierungseinrichtung zur Ausführung des Verfahrens mit den Bestandteilen 10 bis 90

In dem ersten, in Figur 1 dargestellten Verfahrensschritt S100 erfolgt die Eingabe des Klimatisierungsbedürfnisses durch den Bediener. Dieser Schritt wird unter Verwendung geeigneter Eingabevorrichtungen durchgeführt. Geeignete Eingabevorrichtungen sind insbesondere Touchscreens, Bedientasten und/oder Spracherfassungssysteme. Beispiele für Klimatisierungsbedürfnisse sind:
▪ Aktivierung eines Gestank- und Staubschutzes
▪ Anforderung von frischer Luft
▪ Erwärmung der Hände
▪ Erwärmung der Füße
▪ Kühlung der Füße
▪ Entfernen von Beschlag
▪ Schnell Aufheizen
▪ Schnell Abkühlen

In dem sich anschließenden Verfahrensschritt S200 wird das erfasste Klimatisierungsbedürfnis in Klimatisierungsfunktionen aufgelöst. Die Funktionen sind den einzelnen Klimatisierungseinrichtungen zugeordnet und können von diesen ausgeführt werden. Zur Realisierung eines Gestank- und Staubschutzes könnte beispielsweise der Umluftbetrieb aktiviert werden.

Vor Ausführung der einzelnen Klimatisierungsfunktionen wird in Schritt S300 mindestens eine relevante Einflußgröße gemessen. In dem vorliegenden Ausführungsbeispiel kann es sich beispielsweise um das Messen der Luftfeuchtigkeit handeln, um hieraus die Gefahr einer Beschlagbildung auf der Frontscheibe abzuleiten. Sollte diese gegeben sein, wäre die Ausführung des Gestank- und Staubschutzes nicht sinnvoll.

Im Schritt S400 wird der logische Vergleich der gemessenen Einflußgröße mit entsprechenden Grenzwerten vorgenommen. Abhängig von dem Vergleichsergebnis wird eine Rückmeldung an den Bediener über die Umsetzbarkeit seines Klimatisierungsbedürfnisses ausgegeben.

Wird die Umsetzbarkeit positiv bewertet, kann die Ausführung der mindestens einen Klimatisierungsfunktion gestartet werden. Ist die Umsetzbarkeit nicht oder nur eingeschränkt gegeben, wird dieser Sachverhalt an den Bediener zurückgemeldet.

In Figur 2 ist beispielhaft eine Vorrichtung dargestellt, mit der das beschriebene Verfahren ausführbar ist. Sie beinhaltet zunächst geeignete Erfassungsvorrichtungen für die Eingabe des Klimatisierungsbedürfnisses des Bedieners. Dargestellt sind in der Figur zwei Möglichkeiten, nämlich die Eingabe mittels eines Touchscreens 40 sowie die Eingabe mittels eines Spracherkennungssystems, welches - wie dargestellt - mit einem Mikrofon 50 ausgestattet ist. Beide Eingabevorrichtungen sowie weitere alternative Eingabevorrichtungen können einzeln oder in Kombination Bestandteil der Vorrichtung sein.

Zur Verarbeitung des erfassten Klimatisierungsbedürfnisses ist eine erste Steuerungsvorrichtung 60 Bestandteil der Erfindung. Sie ist dergestalt ausgeführt, dass mit ihrer Hilfe das Klimatisierungsbedürfnis in mindestens eine Klimatisierungsfunktion für eine Klimatisierungseinrichtung umgewandelt wird. Beispielhaft ist als Klimatisierungseinrichtung ein Wärmetauscher 30 dargestellt, mit dessen Hilfe die zur Erwärmung des Innenraums notwendige Heizungsluft erzeugt werden kann.

Des Weiteren enthält die erfindungsgemäße Vorrichtung mindestens einen Sensor. In dem ausgeführten Beispiel ist ein Luftgütesensor 20 dargestellt, der im Kraftfahrzeug 10 typischerweise im Bereich der Frischluftzuführung angeordnet ist. Mit seiner Hilfe wird in dem dargestellten Ausführungsbeispiel die Luftgüte der Umgebungsluft gemessen.

Die in der ersten Steuerungsvorrichtung 60 ausgewählte Klimatisierungsfunktion wird in Form einer geeigneten Steuerungsgröße an eine zweite Steuerungsvorrichtung 70 weitergeleitet. Diese Steuerungsvorrichtung 70, die auch mit der Steuerungsvorrichtung 60 in einer Einheit zusammengefasst sein kann, ist geeignet, einen Abgleich des Klimatisierungsbedürfnisses bzw. der hieraus abgeleiteten Klimatisierungsfunktion mit den Signalen des mindestens einen Sensors 20 vorzunehmen . Das dabei generierte Ergebnis wird genutzt, um einen Hinweis über die Ausführbarkeit des Klimatisierungsbedürfnisses an den Bediener auszugeben. Hierfür sind in dem dargestellten Ausführungsbeispiel zwei Ausgabevorrichtungen vorgesehen. Eine visuelle Ausgabe kann insbesondere über ein Display 80 erfolgen, das möglicherweise in das für die Erfassung des Klimatisierungsbedürfnisses vorgesehene Touchscreen 40 integriert ist. Für eine Audioausgabe ist in dem Ausführungsbeispiel ein Lautsprecher 90 vorgesehen.

## Patentansprüche

1. Verfahren zur Steuerung von Klimatisierungseinrichtungen in einem Kraftfahrzeug (10), bei dem
**a.** eine Eingabe eines Klimatisierungsbefürfnisses eines Bedieners erfasst wird, wobei unter einem Klimatisierungsbedürfnis eine an den Wünschen des Bedieners orientierte Vorgabe für die Klimatisierungseinrichtungen in dem Kraftfahrzeug zu verstehen ist, die eine Beschreibung aus Sicht des Bedieners darstellt;
**b.** das Klimatisierungsbedürfnis von einer ersten Steuerungsvorrichtung (60) empfangen wird;
**c.** mit Hilfe der ersten Steuerungsvorrichtung (60) in mindestens eine Klimatisierungsfunktion für mindestens eine Klimatisierungseinrichtung aufgelöst wird;
**d.** mindestens eine klimatisierungsrelevante Einflussgröße mit Hilfe von mindestens einem Sensor (20) erfasst wird;
**e.** mit Hilfe einer zweiten Steuerungsvorrichtung (70) die Umsetzbarkeit des Klimatisierungsbedürfnisses durch einen Vergleich der mindestens einen Klimatisierungsfunktion mit der mindestens einen klimatisierungsrelevanten Einflussgröße geprüft wird;
**dadurch gekennzeichnet, dass**
**f.** für den Fall einer nicht gegebenen oder nicht vollständig gegebenen Umsetzbarkeit des Klimatisierungsbedürfnisses ein Vorschlag für mindestens eine abweichende Klimatisierungsfunktion an den Bediener ausgegeben wird.

2. Verfahren nach Anspruch 1, **dadurch gekennzeichnet, dass** die Erfassung des Klimatisierungsbedürfnisses über einen Touchscreen (40) und/oder ein Sprachsteuerungssystem und/oder Bedientasten erfolgt.

3. Verfahren nach einem der vorherigen Ansprüche, **dadurch gekennzeichnet, dass** bei gegebener Umsetzbarkeit die mindestens eine Klimatisierungsfunktion ausgeführt wird.

4. Verfahren nach einem der vorherigen Ansprüche, **dadurch gekennzeichnet, dass** der Bediener den ausgegebenen Vorschlag annehmen oder ablehnen kann und der Vorschlag nach Bestätigung durch den Bediener ausgeführt wird.

5. Verfahren nach einem der vorherigen Ansprüche, **dadurch gekennzeichnet, dass** nach erfolgreicher Umsetzung des Klimatisierungsbedürfnisses eine Statusmeldung ausgegeben wird.

6. Vorrichtung zur Ausführung eines Verfahrens gemäß den vorherigen Ansprüchen zur Steuerung einer Klimatisierungseinrichtung in einem Kraftfahrzeug umfassend
a. mindestens eine Eingabevorrichtung (40, 50) zur Erfassung einer Eingabe eines Klimatisierungsbedürfnisses eines Bedieners, wobei unter einem Klimatisierungsbedürfnis eine an den Wünschen des Bedieners orientierte Vorgabe für die Klimatisierungseinrichtungen in dem Kraftfahrzeug zu verstehen ist, die eine Beschreibung aus Sicht des Bedieners darstellt;
b. mindestens einen Sensor (20) zur Messung mindestens einer klimatisierungsrelevanten Einflussgröße;
c. mindestens eine Steuerungsvorrichtung (60), mit deren Hilfe das Klimatisierungsbedürfnis des Bedieners in mindestens eine Klimatisierungsfunktion der Klimatisierungseinrichtung auflösbar ist;
d. mittels einer zweiten Steuerungsvorrichtung (70) eine Bewertung des Klimatisierungsbedürfnisses hinsichtlich der Umsetzbarkeit durchführbar ist;
**dadurch gekennzeichnet, dass**
e. für den Fall einer nicht gegebenen oder nicht vollständig gegebenen Umsetzbarkeit des Klimatisierungsbedürfnisses ein Vorschlag für mindestens eine abweichende Klimatisierungsfunktion an den Bediener ausgebbar ist.

## Claims

1. Method for controlling air-conditioning devices in a motor vehicle (10), in which
a. an input of an air-conditioning demand of an operator is registered, wherein an air-conditioning demand is to be understood as a specification for the air-conditioning devices in the motor vehicle which is oriented towards the operator's wishes and constitutes a description from the operator's point of view;
b. the air-conditioning demand is received by a first control apparatus (60);
c. is resolved into at least one air-conditioning function for at least one air-conditioning device using the first control apparatus (60);
d. at least one air-conditioning-relevant influencing variable is registered using at least one sensor (20);
e. the implementability of the air-conditioning demand is tested using a second control apparatus (70) by comparing the at least one air-conditioning function with the at least one air-conditioning-relevant influencing variable;
**characterized in that**
f. a proposal for at least one deviating air-conditioning function is output to the operator in the event of implementability of the air-conditioning demand not being given or not being completely given.

2. Method according to Claim 1, **characterized in that** the air-conditioning demand is registered by means of a touchscreen (40) and/or a voice-operated control system and/or operator control keys.

3. Method according to one of the preceding claims, **characterized in that** when implementability is given the at least one air-conditioning function is executed.

4. Method according to one of the preceding claims, **characterized in that** the operator can accept or decline the proposal that has been output, and the proposal is executed after confirmation by the operator.

5. Method according to one of the preceding claims, **characterized in that** after successful implementation of the air-conditioning demand a status message is output.

6. Apparatus for executing a method according to one of the preceding claims for controlling an air-conditioning device in a motor vehicle, comprising
a. at least one input apparatus (40, 50) for registering an input of an air-conditioning demand of an operator, wherein an air-conditioning demand is to be understood as a specification for the air-conditioning devices in the motor vehicle which is oriented towards the operator's wishes and constitutes a description from the operator's point of view;
b. at least one sensor (20) for measuring at least one air-conditioning-relevant influencing variable;
c. at least one control apparatus (60), which can be used to resolve the air-conditioning demand of the operator into at least one air-conditioning function of the air-conditioning device;
d. an evaluation of the air-conditioning demand with respect to implementability can be carried out by means of a second control apparatus (70);
**characterized in that**
e. a proposal for at least one deviating air-conditioning function can be output in the event of implementability of the air-conditioning demand not being given or not being completely given.

## Revendications

1. Procédé permettant de commander des équipements de climatisation dans un véhicule automobile (10), dans lequel
a) une entrée d'un besoin de climatisation d'un utilisateur est détectée, dans lequel un besoin de climatisation signifie une spécification basée sur les souhaits de l'utilisateur pour les équipements de climatisation dans le véhicule automobile qui représente une description du point de vue de l'utilisateur ;
b) le besoin de climatisation est reçu par un premier dispositif de commande (60) ;
c) à l'aide du premier dispositif de commande (60), ledit besoin est résolu en au moins une fonction de climatisation pour ledit au moins un équipement de climatisation ;
d) au moins une grandeur d'influence concernant la climatisation est détectée à l'aide d'au moins un capteur (20) ;
e) à l'aide d'un deuxième dispositif de commande (70), la faisabilité du besoin de climatisation est vérifiée par une comparaison de ladite au moins une fonction de climatisation avec ladite au moins une grandeur d'influence concernant la climatisation ;
**caractérisé en ce que**
f) dans le cas d'une faisabilité non avérée ou pas complètement avérée du besoin de climatisation, une proposition d'au moins une fonction de climatisation différente est émise à l'intention de l'utilisateur.

2. Procédé selon la revendication 1, **caractérisé en ce que** la détection du besoin de climatisation est effectuée par l'intermédiaire d'un écran tactile (40) et/ou d'un système de commande vocale et/ou de touches de commande.

3. Procédé selon l'une quelconque des revendications précédentes, **caractérisé en ce qu'**en cas de faisabilité avérée, ladite au moins une fonction de climatisation est exécutée.

4. Procédé selon l'une quelconque des revendications précédentes, **caractérisé en ce que** l'utilisateur peut accepter ou refuser la proposition, et la proposition est exécutée après confirmation par l'utilisateur.

5. Procédé selon l'une quelconque des revendications précédentes, **caractérisé en ce qu'**après une réalisation réussie du besoin de climatisation un message d'état est émis.

6. Dispositif permettant d'exécuter un procédé selon les revendications précédentes pour commander un moyen de climatisation dans un véhicule automobile, comprenant
a) au moins un dispositif d'entrée (40, 50) pour détecter une entrée d'un besoin de climatisation d'un utilisateur, dans lequel un besoin de climatisation signifie une spécification basée sur les souhaits de l'utilisateur pour les équipements de climatisation dans le véhicule automobile qui représente une description du point de vue de l'utilisateur ;
b) au moins un capteur (20) pour mesurer au moins une grandeur d'influence concernant la climatisation ;
c) au moins un dispositif de commande (60) à l'aide duquel le besoin de climatisation de l'utilisateur peut être résolu en au moins une fonction de climatisation de l'équipement de climatisation ;
d) au moyen d'un deuxième dispositif de commande (70), une évaluation du besoin de climatisation en ce qui concerne la faisabilité peut être effectuée ;
**caractérisé en ce que**
e) dans le cas d'une faisabilité non avérée ou pas complètement avérée du besoin de climatisation, une proposition d'au moins une fonction de climatisation différente peut être émise à l'intention de l'utilisateur.
